# NEUE EUROPÄISCHE PATENTSCHRIFT

(11) **EP 1 960 141 B2**
(45) Veröffentlichungstag und Bekanntmachung des Hinweises auf die Entscheidung über den Einspruch: **04.03.2015**
(45) Hinweis auf die Patenterteilung: 16.02.2011
(21) Anmeldenummer: 06804354.6
(22) Anmeldetag: 18.10.2006
(51) Int. Cl.: B23C 5/10, B23C 5/20

(54) **FRÄSWERKZEUG**
MILLING TOOL
OUTIL DE FRAISAGE

(30) Priorität: 19.10.2005 AT 70505 U
(43) Veröffentlichungstag der Anmeldung: 27.08.2008
(73) Patentinhaber: CERATIZIT Austria Gesellschaft m.b.H., 6600 Reutte /Tirol (AT)
(72) Erfinder: ERTL, Christian, 6600 Ehenbichl (AT); PRAST, Josef, 6600 Pflach (AT)
(74) Vertreter: Schindele, Claus
(86) Internationale Anmeldenummer: PCT/AT2006/000426
(87) Internationale Veröffentlichungsnummer: WO 2007/045005

(56) Entgegenhaltungen:
- EP-A2- 1 002 608
- DE-A1- 19 709 436
- DE-B- 1 177 904
- JP-A- 2002 066 811
- US-A- 5 207 538

## Beschreibung

Die Erfindung betrifft ein Fräswerkzeug, bestehend aus einem Werkzeugschaft mit einer Rotationsachse D und einem Schneidenbereich mit mindestens einer etwa senkrecht zur Rotationsachse verlaufenden Planschneidkante, weiche umfangsseitig in eine Hauptschneidkante und zentrumsseitig in eine Nebenschneidkante übergeht, wobei die Nebenschneidkante gegenüber der Planschneidkante in Richtung der Rotationsachse nach rückwärts versetzt ist, und- der Schneidenbereich als einstückiges Kopfteil ausgeführt ist.

Ebenso betrifft die Erfindung ein derartiges Fräswerkzeug bei welchem der Schneidenbereich aus mindestens einem auswechselbare Schneideinsatz mit rechteckförmiger oder rhomboidförmiger Grundform besteht, sowie die entsprechenden Schneideinsätze dazu.

Derartige Fräswerkzeuge werden häufig zum Tauchen verwendet, d.h. das Werkzeug taucht zirkular oder schräg in die Oberfläche des zu bearbeitenden Werkstückes bis auf die gewünschte Tiefe ein und trägt dann das weitere abzuspandende Material durch seitliche Vorschubbewegungen ab.

Beim Eintauchprozess schneiden die Hauptschneidkanten und die Planschneidkanten mit dem dazwischen liegenden Eckenbereich in Hauptschnittrichtung vor und leisten dabei die Hauptzerspanungsarbeit, während der nacheilende Bereich der Schneiderrgeometrie mit der Planschneidkante und der Nebenschneidkante, auf der gegenüberliegenden Seite zur Hauptschnittrichtung zum Eingriff kommt.

Ein Fräswerkzeug bei welchem der Schneidenbereich als einstückiges Kopfteil ausgeführt ist, ist beispielsweise in der EP-A-0777545 beschrieben.

Fräswerkzeuge, bei denen der Schneidenbereich durch auswechselbare Wendeschneidplatten gebildet wird, sind beispielsweise in der EP -A- 0 416 901 oder in der EP -A- 0 457 488 beschrieben.

Insbesondere bei einer schräg verlaufenden Nebenschneidkante und/oder bei einem schrägen Eintauchen derartiger Fräswerkzeuge kommt es zu radial auf das Werkzeug wirkenden Zerspanungskräften, die das Werkzeug seitlich abdrängen und zu Vibrationen führen.

Die DE 197 09 436 -A1 beschreibt einen dreieckförmigen Schneideinsatz mit drei spiegelgleichen Schneideinheiten, welcher durch zweimaliges Drehen insgesamt dreimal eingesetzt werden kann. Die Einfräsung von Stabilisierungsstegen in das bearbeitete Werkstück wird mit einem derartigen Schneideinsatz bei einem bestimmungsgemäßen Zerspanungseinsatz nicht erreicht.

Die Aufgabe der vorliegenden Erfindung ist es daher ein Fräswerkzeug zu schaffen, bei dem beim Tauchen eine unerwünschte radiale Abdrängung verbunden mit Vibrationen verhindert werden kann.

Erfindungsgemäß wird dies durch ein Fräswerkzeug nach Anspruch 1 und Anspruch 2 gelöst.

Durch die spezielle Einkerbung zwischen Planschneidkante und Nebenschneidkante wird eine Einbettung der Schneidengeometrie im Werkstück erreicht, die eine Stabilisierung des Werkzeuges in radialer Richtung bewirkt. Das Werkzeug weist dadurch einen ruhigen Lauf ohne Vibrationen auf, so dass größere Vorschübe bei der Zerspanung und größere Schrägen beim Eintauchen des Werkzeuges im Werkstück ermöglicht werden. Darüber hinaus können die erfindungsgemäßen Werkzeuge mit längerer Auskragung, z.B. für das Fräsen von Turbinenschaufeln oder Intregralbauteilen, hergestellt werden.

Wichtig ist, dass die beschriebenen Winkel innerhalb der angegebenen Bereiche liegen.

Ist der Winkel α zwischen der Planschneidkante und dem angrenzenden Abschnitt der Einkerbung kleiner als 90°, kommt es zu ungünstigen Schnittkraftverteilungen und zu einer ungünstigen Spanbildung. Liegt dieser Winkel über 175° wird kein ausreichend guter Stabilisierungseffekt durch die Einkerbung erreicht.

Ist der Winkel β zwischen der Planschneidkante und dem an die Nebenschneidkante angrenzenden Abschnitt der Einkerbung kleiner als 3°, wird ebenfalls keine ausreichend gute Stabilisierung des Werkzeuges erreicht. Wird dieser Winkel größer als 90° kommt es insbesondere bei einer schräg zur Planschneidkante verlaufenden Nebenschneidkante zu einer Bruchgefährdung der Übergangszone zwischen Nebenschneidkante und angrenzendem Abschnitt der Einkerbung.

Ist der Winkel γ zwischen dem Abschnitt der Einkerbung der an die Nebenschneidkante angrenzt und der Nebenschneidkante größer als 177° ist die Stabilisierung des Werkzeuges bei der Zerspanung unzureichend, während es bei einem Winkel γ unter 90° wiederum zu einer Bruchgefährdung der Übergangszone zwischen Nebenschneidkante und angrenzendem Abschnitt der Einkerbung kommt.

Die exakte Bestimmung dieser Winkel am Fräswerkzeug erfolgt am zweckmäßigsten in der Normalansicht auf eine fiktive Ebene, welche durch die Schneidecke zwischen Hauptschneidkante und Planschneidkante und der Drehachse des Fräswerkzeuges verläuft. Sämtliche Punkte der Schneidkanten werden auf diese Ebene projiziert und der dadurch entstehende Konturenverlauf der Schneidkanten bildet die Grundlage für die Bestimmung der Winkel.

Die erfindungsgemäßen Fräswerkzeuge weisen eine höhere Standzeit, verbunden mit einer höheren Betriebssicherheit auf.

Die Form der Einkerbung selbst kann unterschiedliche sein. Es sind vor allem V-förmige, bogenförmige oder trapezförmige Einkerbungen denkbar. Wichtig dabei ist, dass die Winkel der Abschnitte der Einkerbung, welche an die Planschneidkante und an die Nebenschneidkante angrenzen, im angegebenen Bereich liegen. Bei bogenförmigen Einkerbungen bestimmen die Tangenten an die Übergangsbereiche zwischen Nebenschneidkante und Planschneidkante die Festlegung der Winkel innerhalb der erfindungsgemäßen Bereiche.

In einem bevorzugten Bereich liegt dabei der Winkel α zwischen der Plansschneidkante und dem angrenzenden Abschnitt der Einkerbung im Bereich von 120°- 150° und der Winkel β zwischen der Planschneidkante und dem an die Nebenschneidkante angrenzenden Abschnitt der Einkerbung im Bereich von
10°-45°.

Die Tiefe der Einkerbung ist abhängig von der Größe des Schneidenbereiches und soll einerseits so gering wie möglich sein und andererseits doch so groß sein, dass eine ausreichend gute Stabilisierung des Werkzeuges bei der Zerspanung erreicht wird.

Als besonders vorteilhaft hat es sich herausgestellt, wenn die größte Tiefe t der Einkerbung in Bezug auf den vordersten Punkt der Nebenschneidkante im Bereich von 0,1-1 mm liegt.

Die Schneidengeometrie bei den erfindungsgemäßen Fräswerkzeugen kann besonders vorteilhaft durch ein oder mehrere auswechselbare Schneideinsätze realisiert werden, wobei insbesondere solche Schneideinsätze eine im Wesentlichen rechteckige Grundform mit einer Nebenschneidkante, die im Wesentlichen parallel zur Planschneidkante verläuft, oder eine im Wesentlichen rhomboidförmige Grundform aufweisen, bei der die Nebenschneidkante zur Planschneidkante geneigt verläuft.

Bei der rhomboidförmigen Grundform hat sich als besonders vorteilhaft die Ausrichtung der Nebenschneidkante zur Planschneidkante mit einem Winkel δ im Bereich von 20°- 40° und die Ausführung der Einkerbung als V-förmige Einkerbung mit einem Winkel α im Bereich von 140° -150° und einem Winkel β im Bereich von 10°- 30°bewährt.

Im Folgenden wird die Erfindung an Hand von Figuren näher erläutert.

Es zeigen:
- Figur 1: ein erfindungsgemäßes Fräswerkzeug mit einem auswechselbaren Schneideinsatz in Schrägansicht
- Figur 2: den vergrößerten Schneidenbereich des Fräswerkzeuges nach Figur 1
- Figur 3: den Schneideinsatz für das Fräswerkzeug nach Figur 1 und Figur 2 in Schrägansicht
- Figur 4: den Schneideinsatz nach Figur 3 in Draufsicht
- Figur 5: eine Detailansicht des Schneideinsatzes nach Figur 4 in Draufsicht
- Figur 6: eine Detailansicht einer Variante eines Schneideinsatzes in Draufsicht
- Figur 7a-d: weitere Varianten von Schneideinsätzen mit unterschiedlichen Formen von Einkerbungen
- Figur 8: ein erfindungsgemäßes Fräswerkzeug in Kompaktausführung mit integriertem Schneidenbereich in Schrägansicht
- Figur 9: den vergrößerten Schneidenbereich des Fräswerkzeuges nach Figur 8

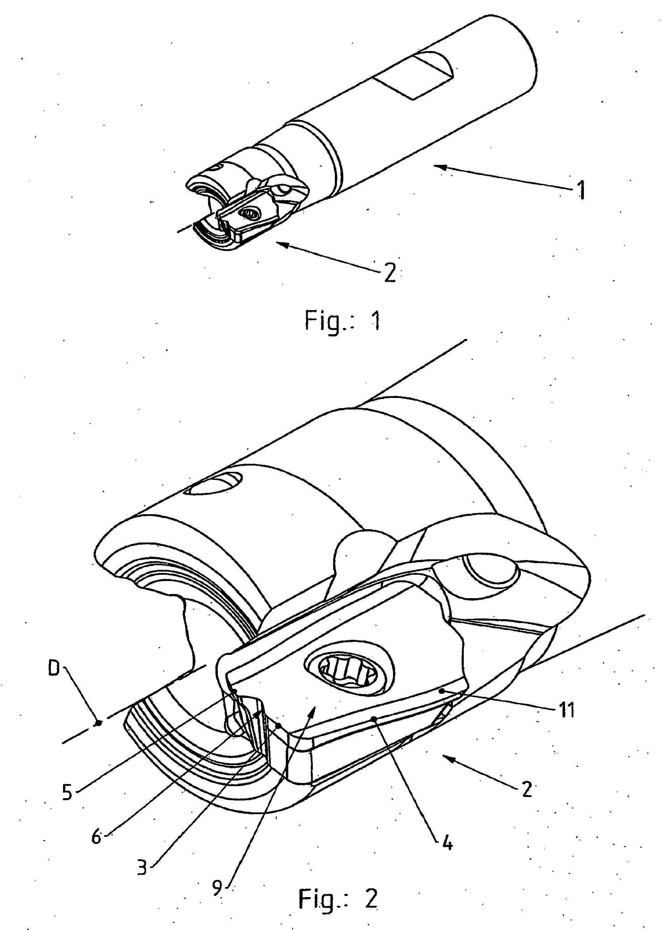

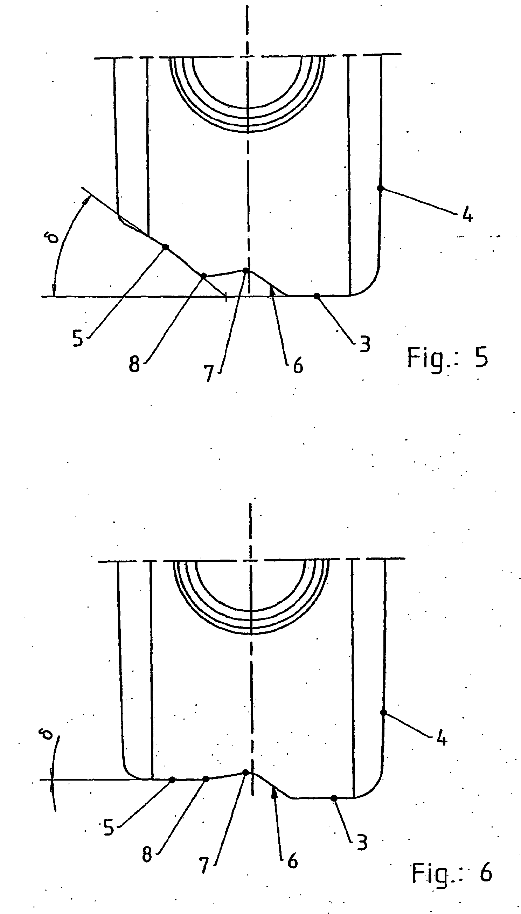

In den Figuren 1 und 2 ist der erfindungsgemäße Schneidenbereich -2- eines Fräswerkzeuges mit einer auswechselbaren Schneideinsatz -9- dargestellt. Die erfindungsgemäßen Winkel α, β, γ und δ sind zur klareren Darstellung nicht am mit dem Schneideinsatz bestückten Fräswerkzeug, sondern am Schneideinsatz -9- selbst in Normalansicht auf die Auflagefläche -10- dargestellt, wobei sich dadurch gegenüber den im Werkzeug gemessenen Winkeln aufgrund des Einstellwinkels um den die Auflagefläche im Werkzeug axial geneigt ist, geringfügige Winkeländerungen ergeben. Der Schneidenbereich -2- weist eine Planschneidkante -3- auf, die etwa senkrecht zur Drehachse D des Fräswerkzeuges verläuft. Etwa senkrecht zur Drehachse bedeutet, dass man zur Herstellung einer möglichst ebenen gefrästen Oberfläche zwar eine Planschneidkante -3- die exakt senkrecht zur Drehachse verläuft anstrebt, dass aber zur problemlosen Zerspanung in der Praxis ein um maximal 1° kleinerer Winkel eingehalten werden muss. Umfangsseitig geht die Planschneidkante -3-über eine kreisbogenförmig ausgeführte Schneidecke in eine
Hauptschneidkante -4- über, welche etwa in Richtung der Drehachse D verläuft. Bei Formen von Wendeschneidplatten bei denen die Hauptschneidkante -4- mit einem großen Übergangsradius in die Planschneidkante -3- übergeht, kann die Planschneidkante -3- auf einem kurzen Endabschnitt von diesem Übergangsradius beschränkt sein. Zentrumsseitig in Richtung zur Drehachse D hin geht die Planschneidkante -3- in eine Nebenschneidkante -5- über, welche unter einem Winkel δ von 35° zur Planschneidkante -3- verläuft. Dieser Winkel ist im Detail aus der Figur 5 zu ersehen.

In der Übergangszone zwischen Planschneidkante -3- und Nebenschneidkante -5- ist eine als Schneidkantenabschnitt ausgeführte V-förmige Einkerbung -6-ausgebildet, deren in der Rotationsachse D gesehen rückwärtigster Punkt -7-hinter dem vordersten Punkt -8- der Nebenschneidkante -5- liegt.

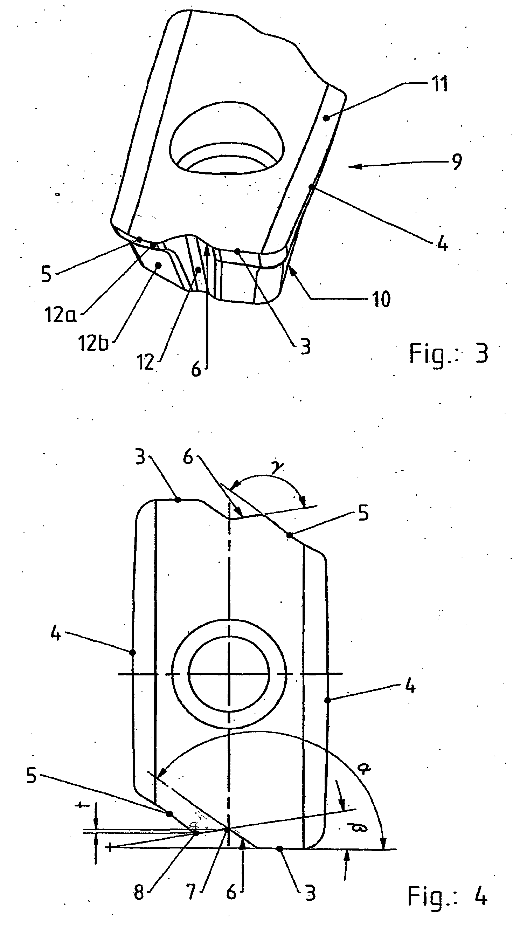

Die genaue Ausführung dieser Einkerbung -6- mit den zugehörigen Winkeln ist aus den Figuren 3 und 4 zu entnehmen, in denen der Schneideinsatz -9- des erfindungsgemäßen Fräswerkzeuges nach Figur 1 und Figur 2 dargestellt ist. Der an die Planschneidkante -3- angrenzende Abschnitt der Einkerbung -6-schließt mit der Planschneidkante -3- einen Winkel α von 145° ein.

Der an die Nebenschneidkante -5- angrenzende Abschnitt der Einkerbung -6-schließt mit der Planschneidkante -3- einen Winkel β von 11° ein.

Prinzipiell ist der Schneideinsatz -9- als positive Wendeschneidplatte mit zwei gegenüberliegenden gleichen Schneidkantenanordnungen ausgeführt, d.h. sämtliche Schneidkanten bzw. Schneidkantenabschnitte -3-, -4-, -5- und -6-werden ausschließlich an der Verschneidung der Freifläche -12-, -12a- mit der Spanfläche -11- an zwei spiegelverkehrt gegenüberliegenden Seiten gebildet, so dass die Wendeschneidplatte durch Verdrehen zweimal verwendet werden kann.

Ebenso wäre eine Ausführung als negative Wendeschneidplatte denkbar, wo zusätzlich auch an der Verschneidung der Auflagefläche -10- mit der Freifläche Schneidkanten bzw. Schneidkantenabschnitte gebildet werden, so dass die Wendeschneidplatte durch Umdrehen und Verdrehen insgesamt viermal verwendet werden kann.

Aus Figur 3 ist zu entnehmen, dass die Auflagefläche -10- und die gegenüberliegende Spanfläche -11- des Schneideinsatzes -9- durch die Freifläche -12-, -12a-, -12b- miteinander verbunden sind, wobei die einzelnen Schneidkanten bzw. Schneidkantenabschnitte -3-, -4-, -5- und -6- an der Verschneidung zwischen der Freifläche -12- und -12a- mit der Spanfläche ausgebildet sind.

Der rückwärtige Punkt -7- der Einkerbung -6- liegt in der Längsachse des Schneideinsatzes -9- gesehen hinter dem vordersten Punkt -8- der Nebenschneidkante -5-.

Im Bereich des als Einkerbung -6- ausgeführten Schneidkantenabschnittes ist die Freifläche -12- einteilig mit einheitlichem Freiwinkel ausgeführt, während die Freifläche -12- im Bereich der Planschneidkanten -3-, der Nebenschneidkanten -5- und der Hauptschneidkanten -4- zweigeteilt, mit einem oberen schmalen Abschnitt -12a- und mit einem zurückgesetzten unteren breiteren Abschnitt - 12b- ausgeführt ist.

Der Freiflächenwinkel des Freiflächenabschnittes -12a- ist kleiner als der Freiflächenwinkel des Freiflächenabschnittes -12b-, so dass im Bereich der am stärksten beanspruchten Schneidkanten eine gute Stabilität der Schneidkanten, verbunden mit einer ausreichenden Freistellung des Schneideinsatzes bei der Zerspanung erreicht wird.

In Figur 6 ist die Variante eines Schneideinsatzes -9- für ein erfindungsgemäßes Fräswerkzeug dargestellt, bei welcher die Nebenschneidkante -5- parallel zur Planschneidkante -3- verläuft, der Winkel δ den diese beiden Schneidkanten miteinander einschließen also 0° beträgt.

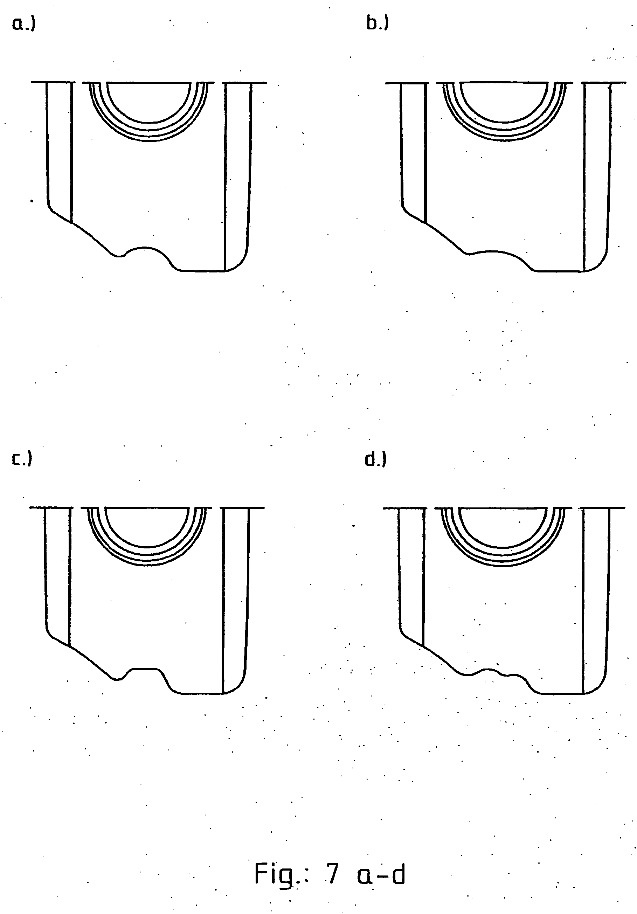

Die Figuren 7a bis 7d zeigen weitere mögliche Varianten, wie die Einkerbung - 6- ausgeführt sein kann, wobei die Erfindung keineswegs auf diese Varianten beschränkt ist.

Wesentlich dabei ist nur, dass die an die Planschneidkante -3- bzw. an die Nebenschneidkante -5- angrenzenden Abschnitte der jeweiligen Einkerbung -6- bzw. deren Tangenten an den Übergangsstellen die Winkelbereiche innerhalb der beanspruchten Bereiche aufweisen.

In Figur 7a ist die Einkerbung -6- kreisbogenförmig, in Figur 7b ellipsenförmig, in Figur 7c trapezförmig und in Figur 7d als zusammengesetzte Kurvenform ausgeführt.

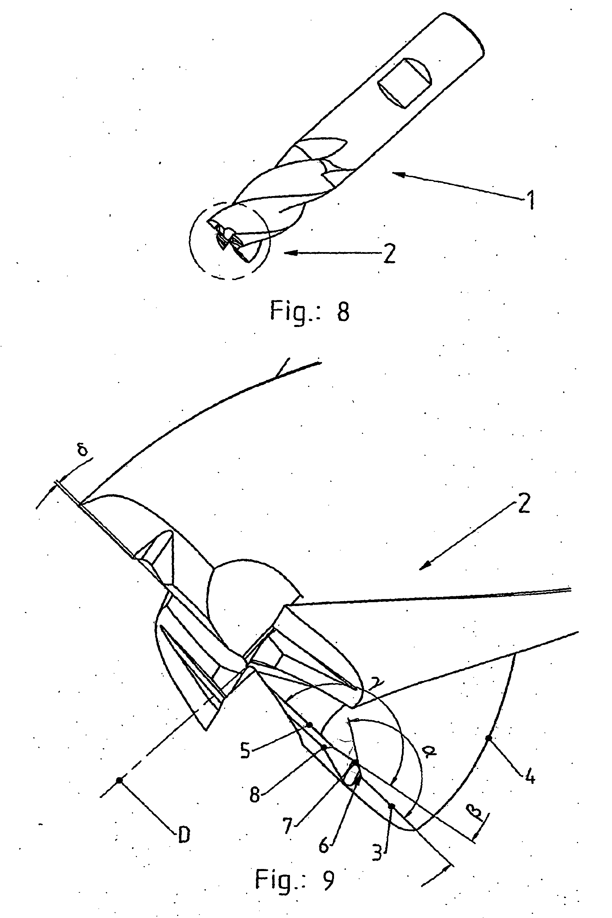

In den Figuren 8 und 9 ist der erfindungsgemäße Schneidenbereich -2- an einem Kompaktfräswerkzeug beispielsweise aus Stahl oder Hartmetall dargestellt, wobei wiederum zwischen Planschneidkante -3- und Nebenschneidkante -5- eine V-förmige Einkerbung -6- ausgeführt ist. Der an die Planschneidkante -3- anschließende Abschnitt der Einkerbung -6- schließt mit der Planschneidkante -3- einen Winkel α von 145° und der an die Nebenschneidkante -5- anschließende Abschnitt der Einkerbung -6- schließt mit der Planschneidkante -3- einen Winkel β von 11 ° ein.

Der Winkel γ zwischen dem Abschnitt der Einkerbung -6- der an die Nebenschneidkante -5- angrenzt und der Nebenschneidkante -5- beträgt 134°.

Die gegenüber der Planschneidkante -3- etwas zurückgesetzte Nebenschneidkante -5- verläuft parallel zur Planschneidkante, so dass der Winkel δ 0° beträgt.

## Patentansprüche

1. Fräswerkzeug, bestehend aus einem Werkzeugschaft (1) mit einer Rotationsachse D und einem Schneidenbereich (2) mit mindestens einer etwa senkrecht zur Rotationsachse D verlaufenden Planschneidkante (3), welche umfangsseitig in eine Hauptschneidkante (4) und zentrumsseitig in eine Nebenschneidkante (5) übergeht, wobei die Nebenschneidkante (5) gegenüber der Planschneidkante (3) in Richtung der Rotationsachse D nach rückwärts versetzt ist, wobei das Fräswerkzeug als Kompaktfraswerkzeng ausgebildet ist und der Schneidenbereich (2) als mit dem Werkzeugschaft (1) einstückig ausgebildetes Kopfteil ausgeführt ist.
**dadurch gekennzeichnet,**
**dass** in der Übergangszone zwischen Planschneidkante (3) und Nebenschneidkante (5) mindestens eine als Schneidkantenabschnitt ausgeführte Einkerbung (6) ausgebildet ist, deren - in Stirnansicht in Richtung der Rotationsachse D gesehen - rückwärtigster Punkt (7) hinter dem vordersten Punkt (8) der Nebenschneidkante (5) liegt, wobei der Winkel α zwischen der Planschneidkante (3) und dem angrenzenden Abschnitt der Einkerbung (6) im Bereich von 90°- 175° liegt und der Winkel β zwischen der Planschneidkante (3) und dem an die Nebenschneidkante (5) angrenzenden Abschnitt der Einkerbung (6) im Bereich von 3°- 90° liegt, wobei der Winkel γ zwischen dem Abschnitt der Einkerbung, (6), der an die Nebenschneidkante (5) angrenzt und der Nebenschneidkante (5) im Bereich von 90°- 177° liegt.

2. Fräswerkzeug, bestehend aus einem Werkzeugschaft (1) mit einer Rotationsachse D und einem Schneidenbereich (2), der aus mindestens einem auswechselbaren Schneideinsatz (9) mit rechteckförmiger oder rhomboidförmiger Grundform besteht, mit mindestens einer etwa senkrecht zur Rotationsachse D verlaufenden Planschneidkante (3), welche umfangsseitig in eine Hauptschneidkante (4) und zentrumsseitig in eine Nebenschneidkante (5) übergeht, wobei die Nebenschneidkante (5) gegenüber der Planschneidkante (3) in Richtung der Rotationsachse D nach rückwärts versetzt ist, **dadurch gekennzeichnet, dass** in der Übergangszone zwischen Planschneidkante (3) und Nebenschneidkante (5) mindestens eine als Schneidkantenabschnitt ausgeführte Einkerbung (6) ausgebildet ist, deren - in Stirnansicht in Richtung der Rotationsachse D gesehen - rückwärtigster Punkt (7) hinter dem vordersten Punkt (8) der Nebenschneidkante (5) liegt, wobei der Winkel α zwischen der Planschneidkante (3) und dem angrenzenden Abschnitt der Einkerbung (6) im Bereich von 90°-175° liegt und der Winkel β zwischen der Planschneidkante (3) und dem an die Nebenschneidkante (5) angrenzenden Abschnitt der Einkerbung (6) im Bereich von 3°- 90° liegt wobei der Winkel γ zwischen dem Abschnitt der Einkerbung (6), der an die Nebenschneidkante (5) angrenzt und der Nebenschneidkante (5) im Bereich von 90°-177° liegt.

3. Fräswerkzeug nach Anspruch 1 oder 2, **dadurch gekennzeichnet, dass** der Winkel α im Bereich von 120°- 150° und der Winkel β im Bereich von 8°- 35° liegt.

4. Fräswerkzeug nach einem der Ansprüche 1 bis 3, **dadurch gekennzeichnet, dass** die größte Tiefe t der Einkerbung (6) in Bezug auf den vordersten Punkt (8) der Nebenschneidkante (5) im Bereich von 0,1 - 1 mm liegt.

5. Fräswerkzeug nach einem der Ansprüche 1 bis 4, **dadurch gekennzeichnet, dass** die Nebenschneidkante (5) unter einem Winkel δ im Bereich von 20° - 40° zur Planschneidkante (3) verläuft und die Einkerbung (6) V-förmig mit einem Winkel α im Bereich von 140°- 150° und einem Winkel β im Bereich von 10° - 30° ausgebildet ist.

## Claims

1. A milling tool consisting of a tool shank (1) with an axis of rotation D and of a cutting region (2) with at least one planar cutting edge (3) which runs approximately perpendicularly with respect to the axis of rotation D and which merges on the circumference into a main cutting edge (4) and at the center into a secondary cutting edge (5), the secondary cutting edge (5) being offset rearward with respect to the planar cutting edge (3) in the direction of the axis of rotation D, wherein the milling tool is formed as a compact milling tool and the cutting region (2) is formed as a head part formed in one piece with the tool shank (1), **characterized in that** in the transitional zone between the planar cutting edge (3) and secondary cutting edge (5), at least one notch (6) is formed which is formed as a cutting edge portion and of which the rearmost point (7), as seen in an end view in the direction of the axis of rotation D, lies behind the foremost point (8) of the secondary cutting edge (5), the angle α between the planar cutting edge (3) and the adjacent portion of the notch (6) lying in the range of 90° - 175°, and the angle β between the planar cutting edge (3) and that portion of the notch (6) which is adjacent to the secondary cutting edge (5) lying in the range of 3° - 90°, the angle γ between that portion of the notch (6) which is adjacent to the secondary cutting edge (5) and the secondary cutting edge (5) lying in the range of 90° - 177°.

2. A milling tool consisting of a tool shank (1) with an axis of rotation D and of a cutting region (2), consisting of at least one exchangeable cutting insert (9) with rectangular or rhomboidic basic shape, with at least one planar cutting edge (3) which runs approximately perpendicularly with respect to the axis of rotation D and which merges on the circumference into a main cutting edge (4) and at the center into a secondary cutting edge (5), the secondary cutting edge (5) being offset rearward with respect to the planar cutting edge (3) in the direction of the axis of rotation D, charcterized in that, in the transitional zone between the planar cutting edge (3) and secondary cutting edge (5), at least one notch (6) is formed which is formed as a cutting edge portion and of which the rearmost point (7), as seen in an end view in the direction of the axis of rotation D, lies behind the foremost point (8) of the secondary cutting edge(5), the angle α between the planar cutting edge (3) and the adjacent portion of the notch (6) lying in the range of 90° - 175°, and the angle β between the planar cutting edge (3) and that portion of the notch (6) which is adjacent to the secondary cutting edge (5) lying in the range of 3° - 90°, the angle γ between that portion of the notch (6) which is adjacent to the secondary cutting edge (5) and the secondary cutting edge (5) lying in the range of 90° - 177°.

3. The milling tool as claimed in claim 1 or 2, **characterized in that** the angle α lies in the range of 120° - 150° and the angle β lies in the range of 8° - 35°.

4. The milling tool as claimed in one of claims 1 to 3, **characterized in that** the greatest depth t of the notch (6) with respect to the foremost point (8) of the secondary cutting edge (5) lies in the range of 0.1 - 1 mm.

5. The milling tool as claimed in one of claims 1 to 4, **characterized in that** the secondary cutting edge (5) runs at an angle δ in the range of 20° - 40° with respect to the planar cutting edge (3), and the notch (6) is of V-shaped design with an angle α in the range of 140° - 150° and with an angle P in the range of 10° - 30°.

## Revendications

1. Outil de fraisage constitué d'une tige d'outil (1) avec un axe de rotation D et d'une zone de coupe (2) comprenant au moins une arête de coupe plane (3) s'étendant approximativement perpendiculairement à l'axe de rotation D, laquelle arête de coupe plane se prolonge du côté de la périphérie par une arête de coupe principale (4) et du côté du centre par une arête de coupe auxiliaire (5), l'arête de coupe auxiliaire (5) étant décalée vers l'arrière par rapport à l'arête de coupe plane (3) dans la direction de l'axe de rotation D, l'outil de fraisage étant réalisé sous forme d'outil de fraisage compact et la zone de coupe (2) étant réalisée sous forme de partie de tête réalisée d'une seule pièce avec la tige d'outil (1),
**caractérisé en ce que**
dans la zone de transition entre l'arête de coupe plane (3) et l'arête de coupe auxiliaire (5) est réalisée au moins une encoche (6) réalisée sous forme de portion d'arête de coupe, dont le point le plus en arrière (7) - considéré en vue frontale dans la direction de l'axe de rotation D - est situé derrière le point le plus en avant (8) de l'arête de coupe auxiliaire (5), l'angle α entre l'arête de coupe plane (3) et la portion adjacente de l'encoche (6) étant situé dans la plage de 90° à 175° et l'angle β entre l'arête de coupe plane (3) et la portion de l'encoche (6) adjacente à l'arête de coupe auxiliaire (5) étant située dans la plage de 3° à 90°, l'angle γ entre la portion de l'encoche (6) qui est adjacente à l'arête de coupe auxiliaire (5) et l'arête de coupe auxiliaire (5) étant situé dans la plage de 90° à 177°.

2. Outil de fraisage constitué d'une tige d'outil (1) comprenant un axe de rotation D et d'une zone de coupe (2) qui se compose d'au moins un insert de coupe (9) remplaçable dont la forme de base est rectangulaire ou rhomboïde, comprenant au moins une arête de coupe plane (3) s'étendant approximativement perpendiculairement à l'axe de rotation D, laquelle arête de coupe plane se prolonge du côté de la périphérie par une arête de coupe principale (4) et du côté du centre par une arête de coupe auxiliaire (5), l'arête de coupe auxiliaire (5) étant décalée vers l'arrière par rapport à l'arête de coupe plane (3) dans la direction de l'axe de rotation D, **caractérisé en ce que** dans la zone de transition entre l'arête de coupe plane (3) et l'arête de coupe auxiliaire (5) est réalisée au moins une encoche (6) réalisée sous forme de portion d'arête de coupe, dont le point le plus en arrière (7) - considéré en vue frontale dans la direction de l'axe de rotation D-est situé derrière le point le plus en avant (8) de l'arête de coupe auxiliaire (5), l'angle α entre l'arête de coupe plane (3) et la portion adjacente de l'encoche (6) étant situé dans la plage de 90° à 175° et l'angle β entre l'arête de coupe plane (3) et la portion de l'encoche (6) adjacente à l'arête de coupe auxiliaire (5) étant située dans la plage de 3° à 90°, l'angle γ entre la portion de l'encoche (6) qui est adjacente à l'arête de coupe auxiliaire (5) et l'arête de coupe auxiliaire (5) étant situé dans la plage de 90° à 177°.

3. Outil de fraisage selon la revendication 1 ou 2, **caractérisé en ce que** l'angle α est situé dans la plage de 120° à 150° et l'angle β est situé dans la plage de 8° à 35°.

4. Outil de fraisage selon l'une quelconque des revendications 1 à 3, **caractérisé en ce que** la plus grande profondeur t de l'encoche (6) par rapport au point le plus en avant (8) de l'arête de coupe auxiliaire (5) est située dans la plage de 0,1 à 1 mm.

5. Outil de fraisage selon l'une quelconque des revendications 1 à 4, **caractérisé en ce que** l'arête de coupe auxiliaire (5) s'étend suivant un angle δ dans la plage de 20° à 40° par rapport à l'arête de coupe plane (3) et l'encoche (6) est réalisée en forme de V avec un angle α dans la plage de 140° à 150° et un angle β dans la plage de 10° à 30°.
